# EUROPÄISCHE PATENTSCHRIFT

(11) **EP 2 140 173 B1**
(45) Veröffentlichungstag und Bekanntmachung des Hinweises auf die Patenterteilung: **14.12.2011**
(21) Anmeldenummer: 08735217.5
(22) Anmeldetag: 14.04.2008
(51) Int. Cl.: F16H 25/06, H02K 7/116

(54) **KOAXIALGETRIEBE**
COAXIAL TRANSMISSION
TRANSMISSION COAXIALE

(30) Priorität: 27.04.2007 DE 102007020415
(43) Veröffentlichungstag der Anmeldung: 06.01.2010
(73) Patentinhaber: Wittenstein AG, 97999 Igersheim (DE)
(72) Erfinder: WILHELM, Thomas, 97993 Creglingen (DE); SCHMIDT, Michael, 97232 Giebelstadt (DE); BAYER, Thomas, 97999 Igersheim (DE)
(74) Vertreter: Weiss, Peter
(86) Internationale Anmeldenummer: PCT/EP2008/002937
(87) Internationale Veröffentlichungsnummer: WO 2008/135137

(56) Entgegenhaltungen:
- EP-A- 0 201 730
- AU-A- 6 179 286
- DE-C- 341 053
- FR-A- 755 284
- US-A1- 2001 052 735

## Beschreibung

Die vorliegende Erfindung betrifft ein Koaxialgetriebe nach dem Oberbegriff des Anspruchs 1

### Stand der Technik

Herkömmliche Getriebe sind in vielfältiger Form und Ausführung im Markt bekannt und erhältlich. Nachteilig bei den herkömmlichen Koaxialgetrieben ist jedoch, dass diese sehr komplex aufgebaut sind und nur innere Wellen und Hohlwellen zulassen, die einen geringen Durchmesser im Verhältnis zum Gesamtdurchmesser des Getriebes aufweisen. Zudem sind herkömmliche Koaxialgetriebe sehr komplex aufgebaut und lassen nur sehr geringe Innendurchmesser zu. Ausserdem sind herkömmliche Koaxialgetriebe sehr schwer, viel zu breit und von grossem Durchmesser im Verhältnis zur genutzten Leistung.

Sowohl die EP 0 201 730 A1 wie auch die FR 755 284, die als nächster Stand der Technik augesehen wird, zeigen Koaxialgetriebe. Bei diesen besteht jeweils die Möglichkeit, ein Planetengetriebe in die Hohlwelle einzusetzen. Nachteiligerweise kann aber baugrössenbedingt kein Planetengetriebe mit Leistungsdaten, die zu den Hohlwellengetrieben passen bzw. zu einer sinnvollen technischen Anführung führen, eingesetzt werden.

Zudem soll ein universeller Einsatz eines Koaxialgetriebes durch Gewährleistung von Um- und Anbauvarianten beliebiger Art unter Verwendung desselben Rumpfgehäuses und Verwendung einer Vielzahl von gleichen Bauteilen möglich sein.

### Aufgabe

Aufgabe der vorliegenden Erfindung ist, ein Koaxialgetriebe der eingangs genannten Art zu schaffen, welches die genannten Nachteile beseitigt, welches einen grossen Innendurchmesser schafft und welches universell auch unter Gewährleistung von Um- und Anbauvarianten beliebiger Art hergestellt werden kann.

### Lösung der Aufgabe

Zur Lösung dieser Aufgabe führen die Merkmale des kennzeichnenden Teils von Anspruch 1.

Bei der vorliegenden Erfindung hat sich als besonders vorteilhaft erwiesen, ein Koaxialgetriebe, insbesondere ein Hohlwellengetriebe zu schaffen, welches einen grossen Innendurchmesser des Antriebselementes gewährleistet.

Im Antriebselement selbst sind eine Mehrzahl von radial nach aussen bewegbare Zahnsegmente gelagert, die dann in eine Hohlradinnenverzahnung eines Hohlrades eingreifen.

Durch eine Mehrteiligkeit von Gehäuseteilen, die sich dann an die Hohlradinnenverzahnung axial jeweils beidseitig anschliessen, lässt sich auch eine flexible Lagerung des eigentlichen Abtriebselementes zu den Gehäuseteilen und damit zur Hohlradinnenverzahnung herstellen.

Auf diese Weise lässt sich ein sehr kompaktes Koaxialgetriebe schaffen, welches einen maximal möglichen grossen Innendurchmesser bei geringem Gesamtdurchmesser mit geringer Breite aufweist, so dass hierdurch eine neue Möglichkeit geschaffen ist, ein Koaxialgetriebe in unterschiedlichsten Bereichen mit hoher Leistungsdichte einzusetzen.

In dieses Grund- und Rumpfgetriebe kann dann in das Antriebselement eine erste Vorstufe als Planetenvorstufe eingesetzt werden, die über die unterschiedlichen Antriebswellenritzel oder, wie in einem weiteren Ausführungsbeispiel gezeigt ist, über einen eigenständigen elektrisch koaxial innen eingesetzten Elektroantrieb angetrieben werden kann.

Ferner ist auch denkbar, dass axial anschliessend an das eine Gehäuseteil, insbesondere axial anschliessend an das Antriebselement, mit grossem Innendurchmesser ein Hohlwellenelektroantrieb mit grosser Antriebsleistung angeschlossen werden kann, wobei ein Hohlwellenrotor mit etwa gleichem Innendurchmesser direkt an das Antriebselement anschliessbar ist. Dieser ist dann über entsprechende Motorgehäuse und darin enthaltene Spulenwicklungen angetrieben und gelagert.

Auf diese Weise lässt sich ein Koaxialgetriebe mit sehr grossem Innendurchmesser und geringsten äusseren Durchmessern und hoher Antriebsleistung herstellen.

In einem weiteren Ausführungsbeispiel der vorliegenden Erfindung kann zwischen herkömmlichen Rumpfgetrieben bzw. Koaxialgetrieben und einem Hohlwellenelektroantrieb noch eine Vorstufe kreisringartig axial dazwischen eingesetzt sein, bevorzugt als Planetenvorstufe, so dass ebenfalls ein Hohlwellengetriebe, insbesondere Koaxialgetriebe mit Hohlwellenelektroantrieb, Vorstufe und eigentlichem Hohlwellengetriebe mit äusserst grossem Innendurchmesser gebildet werden kann.

Hierdurch können sehr hohe Momente bei sehr gross ausgebildeten Innendurchmessern des Antriebselementes übertragen werden, wobei insgesamt die Baugrösse sowie das Baugewicht des gesamten Koaxialgetriebes deutlich minimiert ist.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1a einen Querschnitt durch ein nicht beanspruchtes Koaxialgetriebe, insbesondere durch ein Hohlwellengetriebe;
Figur 1b einen Längsschnitt durch das nicht beanspruchte Koaxialgetriebe gemäss Figur 1 a;
Figur 2a einen Längsschnitt durch ein Koaxialgetriebe mit erfindungsgemäss eingesetzter Vorstufe;
Figur 2b einen Längsschnitt durch ein Koaxialgetriebe mit koaxial eingesetzter Vorstufe und anschliessendem elektrischen Antrieb;
Figur 3 einen Längsschnitt durch ein weiteres nicht beanspruchtes Ausführungsbeispiel eines Koaxialgetriebes, ausgeführt als Koaxialgetriebe mit anschliessendem Hohlwellenelektroantrieb;
Figur 4 einen Längsschnitt durch ein weiteres Ausführungsbeispiel eines Koaxialgetriebes mit angeschlossenem Hohlwellenelektroantrieb und Vorstufe.

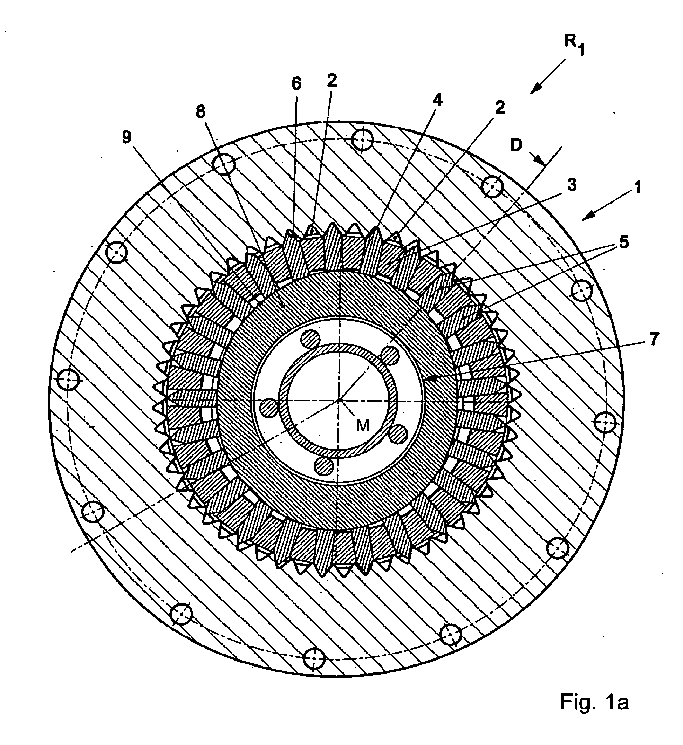

Gemäss Figur 1a weist ein nicht beanspruchtes koaxialgetriebe R₁ ein Hohlrad 1 auf, welches innenliegende Zähne 2 besitzt. Innerhalb des Hohlrades 1 ist ein Abtriebselement 3 gebildet, welches eine Mehrzahl von Führungen 4 besitzt, in welchen Zahnsegmente 5 radial hin und her verschiebbar gelagert und einends mit Zahnflanken 6 versehen sind.

Innerhalb des Abtriebselementes 3 mit aufgenommenen Zahnsegmenten 5 ist ein Antriebselement 7, ausgebildet als Hohlwelle, vorgesehen, welches eine äussere Profilierung 8 aufweist. Die Profilierung 8 kann mit einer Kontur, mehreren unterschiedlichen Konturen oder mehreren Erhöhungen, polygon-oder nockenartig ausgebildet sein.

Wird das Antriebselement 7 bspw. rotativ um eine Mittelachse M angetrieben, so werden die einzelnen Zahnsegmente 5 radial entsprechend bedingt durch die Profilierung 8 über deren äusseren Kontur 9 nach aussen in die Zähne 2 des Hohlrades 1 bewegt. Durch die unterschiedliche Anzahl von Zähnen 2 des Hohlrades 1 zur unterschiedlichen Anzahl der Zahnsegmente 5, die teilweise in Eingriff stehen, lässt sich ein Übersetzungsverhältnis einstellen. Dabei kann die übersetzte Antriebsleistung, welche über das Antriebselement 7 eingeleitet wird, wahlweise über das Abtriebselement 3 oder das Hohlrad 1 abgeführt werden.

Wichtig dabei ist, dass entweder das Abtriebselement 3 als feststehendes Element ausgebildet und das Hohlrad 1 als Abtriebselement radial verdrehbar oder das Hohlrad 1 feststehend und das Abtriebselement 3 zur Aufnahme der Zahnsegmente 5 als reines Abtriebselement ausgebildet ist. Beide Möglichkeiten und Varianten sollen hier mit umfasst sein.

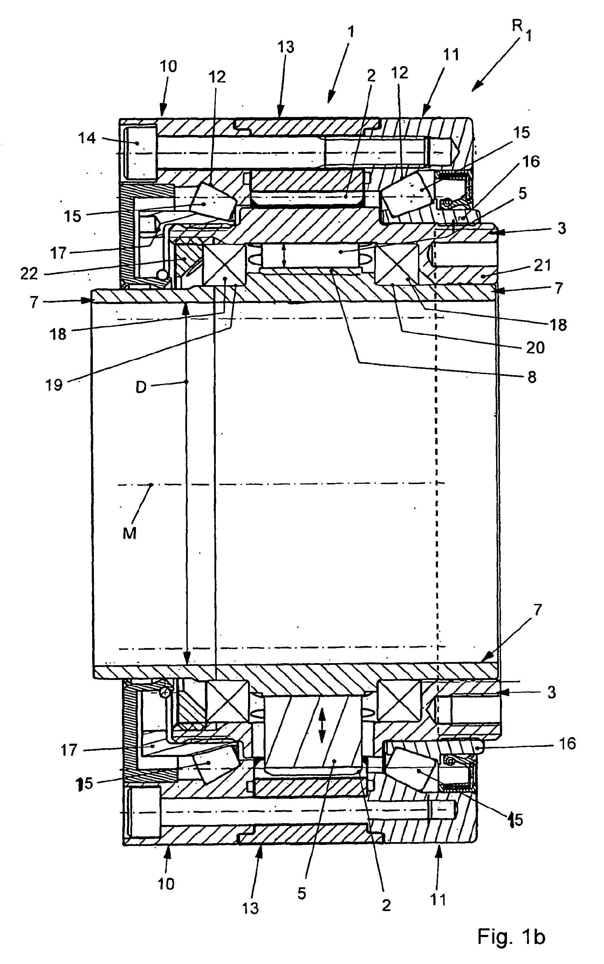

Der Aufbau des vorliegenden nicht beanspruchten koaxialgetriebes R₁ in längsschnittlicher Darstellung gemäss Figur 1b hat sich zur Erzielung eines möglichst grossen Innendurchmessers D des Antriebselementes 7 als besonders vorteilhaft erwiesen. Dabei besteht das Hohlrad 1 aus einem ersten Gehäuseteil 10 und einem zweiten Gehäuseteil 11 und einer Hohlradinnenverzahnung 13, welche kreisringartig ausgebildet sind.

Die beiden Gehäuseteile 10, 11 weisen eine nach innen gerichtete nach aussen geneigte Abtriebslagerfläche 12 auf. Zwischen den beiden Gehäuseteilen 10, 11 ist eine Hohlradinnenverzahnung 13 axial eingesetzt.

Über eine Mehrzahl von Befestigungselementen 14 lassen sich der erste Gehäuseteil 10 und axial die anschliessende Hohlradinnenverzahnung 13 und das daran anschliessende Gehäuseteil 11 zum eigentlichen Hohlrad 1 fest oder wiederlösbar verbinden.

Anstelle des Befestigungselementes 14 können auch Schweissverbindungen od. dgl. zur Festlegung des Gehäuseteiles 10 mit der Hohlradinnenverzahnung 13 und dem Gehäuseteil 11 dienen.

Zur Erzielung eines möglichst grossen Innendurchmessers D hat sich jedoch die Mehrteiligkeit des Hohlrades 1 als besonders vorteilhaft erwiesen. Zudem lassen sich unterschiedliche Hohlradinnenverzahnungen 13 unter Verwendung von gleichen oder ähnlichen Gehäuseteilen 10, 11 universell mit unterschiedlichen Grössen und Übersetzungen einsetzen, verwenden oder bei Verschleiss ggf. austauschen.

Innerhalb der Hohlradinnenverzahnung 13 sind die Zähne 2 gebildet, in welche die Zahnsegmente 5 durch rotatives Antreiben des Antriebselementes 7 eingeschoben werden können.

Dabei hat sich bei dem vorliegenden Koaxialgetriebe als vorteilhaft erwiesen, dass das Hohlrad 1 insbesondere über die Gehäuseteile 10, 11 über ihre nach aussen schräg geneigten Abtriebslagerflächen 12 gegenüber dem Antriebselement 7 radial und axial zentriert gelagert ist. Dabei stehen die Abtriebslager 15 flanschseitig des Antriebselementes 7 über eine Lageraufnahme 16 mit dem Abtriebselement 3 in Verbindung.

Über die Lageraufnahme 16 lassen sich stirnseitig die Abtriebslager 15 einfahren und stellen eine Lagerung im Gehäuseteil 11, insbesondere zur Abtriebslagerfläche 12, her. Auf der gegenüberliegenden Seite werden über die umlaufende Lageraufnahme 17 die Lager 15 an der Abtriebslagerfläche 12 des Gehäuseteiles 10 abgestützt. Die Lageraufnahme 17 stützt sich am Abtriebselement 3 ab. Auf diese Weise lassen sich durch die Mehrteiligkeit der Gehäuseteile 10, 11 sowie der Hohlradinnenverzahnung 13 sämtliche Bauteile gegenüber dem Abtriebselement 3 koaxial montieren, insbesondere auch bei eingesetzten Zahnsegmenten 5.

Ferner hat sich als vorteilhaft bei dem vorliegenden Koaxialgetriebe, dass das Abtriebselement 3 über Antriebslager 18 gegenüber dem koaxial innenliegenden Antriebselement 7 abgestützt bzw. gelagert ist. Das Antriebselement 7 ist koaxial innerhalb des Abtriebselementes 3 über die Antriebslager 18 gelagert, wobei diese auf jeweils axial zur Profilierung 8 benachbarten Lagersitzen 19, 20 angeordnet sind. Im Bereich des Abtriebselementes 3 ist aus diesem einen Vorsprung 21 gebildet, der dem axialen Anschlag des Antriebslagers 18 dient. Das axial gegenüberliegende Antriebslager 18 ist über einen Lagerhaltering 22 gegenüber dem Abtriebselement 3 gesichert.

Auf diese Weise ist ein nicht beanspruchtes Koaxialgetriebe R₁ geschaffen, welches einen sehr grossen Innendurchmesser D des Antriebselementes 7 zulässt und zudem einen Gesamtdurchmesser aufweist, der noch bei einer sehr geringen Breite des Koaxialgetriebes sehr gering ist. Auf diese Weise wird ein äusserst kompaktes Koaxialgetriebe geschaffen.

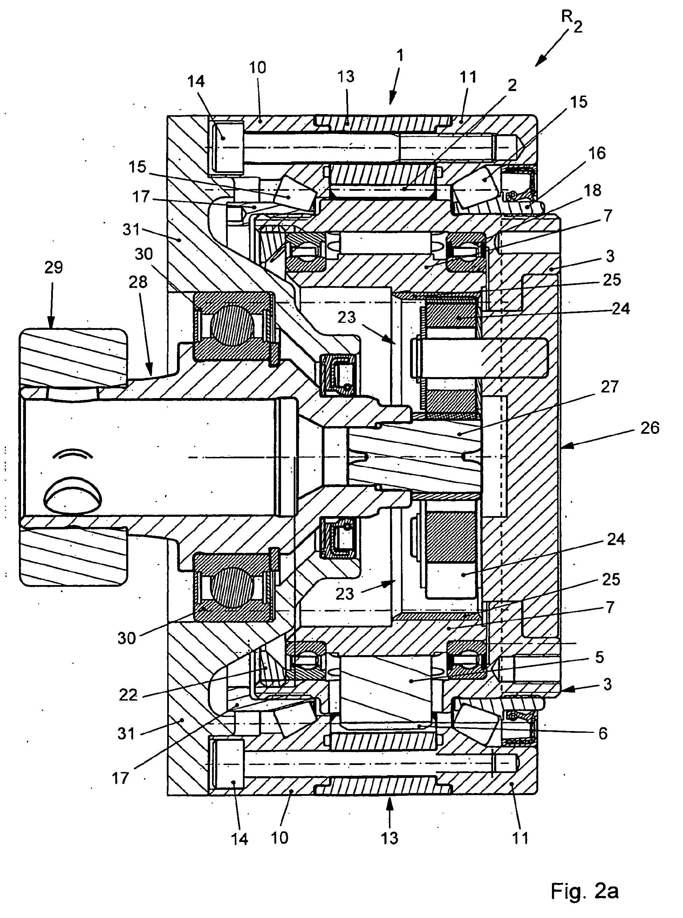

In Figur 2a ist im wesentlichen ein Koaxialgetriebe R₂ aufgezeigt, welches von seiner Grundstruktur und seinem Aufbau dem Koaxialgetriebe R₁ gemäss Figur 1b entspricht. Unterschiedlich ist hier, dass innerhalb des Antriebselementes 7, welches ebenfalls als Hohlwelle ausgeführt ist, dieses mit einer Vorstufe 23, insbesondere der Planetenvorstufe in Eingriff steht. Dabei ist die Vorstufe 23 innerhalb des sehr gross ausgebildeten Innendurchmessers D des Antriebselementes 7 koaxial eingesetzt und lässt, bedingt durch den grossen Innendurchmesser D, eine sehr hohe Leistungsfähigkeit der Vorstufe 23 zu. Die als Planetenvorstufe ausgebildete Vorstufe 23 greift über eine Mehrzahl von Planeten 24 in eine Innenverzahnung 25 des Antriebselementes 7 ein. Die Planeten 24 sind über einen gemeinsamen Planetenradträger 26 gelagert, der wiederum koaxial mit dem Abtriebselement 3 in Verbindung steht. Die Planeten 24 werden von einem gemeinsamen Sonnenrad 27 gekämmt. Dabei lässt sich das Moment über eine Antriebswelle 28 mit ggf. aufsitzender Klemmnabe 29, Antriebsritzel, Keilwelle, Passfeder od.dgl. antreiben. Die Antriebswelle 28 ist über ein Lager 30 gegenüber einem Lagergehäuse 31 abgestützt und steht mit dem Gehäuseteil 10 axial in Verbindung.

Von Vorteil bei der vorliegenden Erfindung ist, dass eine Vorstufe 23 koaxial innerhalb des Koaxialgetriebes R₂ einsetzbar ist, und, bedingt durch den verhältnismässig gross ausgebildeten Innendurchmesser D des Antriebselementes 7, lassen sich noch sinnvolle Übersetzungsstufen, insbesondere Vorstufen 23, koaxial innerhalb des Koaxialgetriebes R₂ einsetzen. Auch hier ist auf minimalem Gesamtdurchmesser des Koaxialgetriebes R₂ bei minimalster Breite noch eine Integration einer Vorstufe 23 innerhalb des Koaxialgetriebes R₂ möglich.

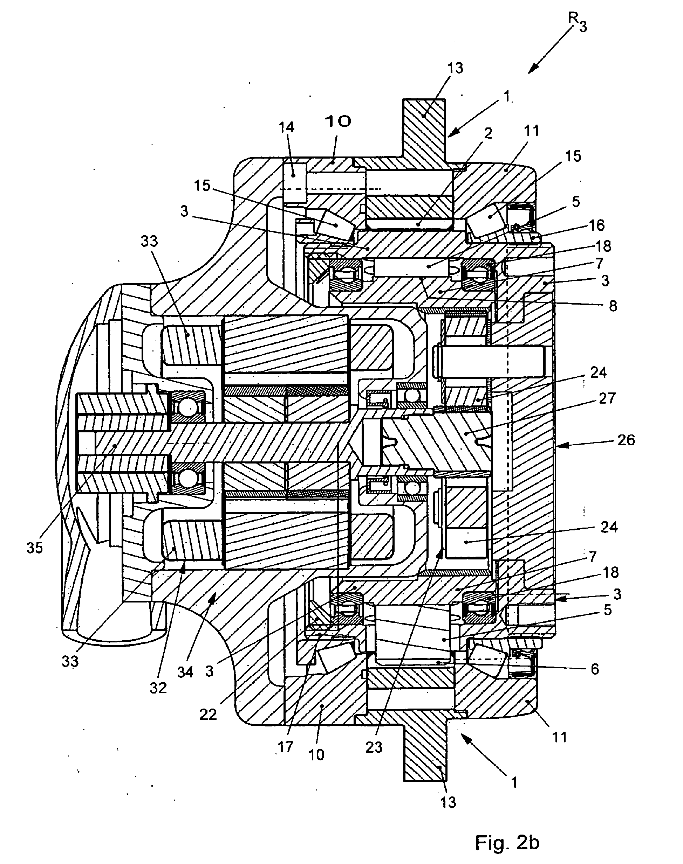

Im Figur 2b ist ein Koaxialgetriebe R₃ aufgezeigt, welches im wesentlichen dem Aufbau des Koaxialgetriebes R₁ entspricht. In dieses ist ebenfalls wie beim Koaxialgetriebe R₂ eine Vorstufe 23 als Planetenvorstufe eingesetzt. Direkt an das Sonnenrad 27 schliesst nun koaxial zumindest teilweise innerhalb des Antriebselementes 7 ein elektrischer Antrieb 32 an, um die erste Vorstufe 23, insbesondere die Planetenvorstufe, anzutreiben.

Dabei sind entsprechende Erregerspulen 33 in einem Motorgehäuse 34, welches mit dem Gehäuseteil 10 axial in Verbindung steht, angeordnet. Die Lagerung 30 der Motorwelle 35, welche auch die entsprechenden Permanentmagnete, Magnetentwicklung od.dgl., hier nicht näher gekennzeichnet, aufnimmt, stützt sich ebenfalls im Motorgehäuse 34 ab. Wichtig bei der vorliegenden Erfindung ist, dass auch innerhalb und koaxial bedingt durch den sehr grossen Innendurchmesser D des Abtriebselementes 3 sich nicht nur die erste Vorstufe 23 sondern auch zumindest teilweise der elektrische Antrieb 32 koaxial in das Koaxialgetriebe R₃ integrieren lässt.

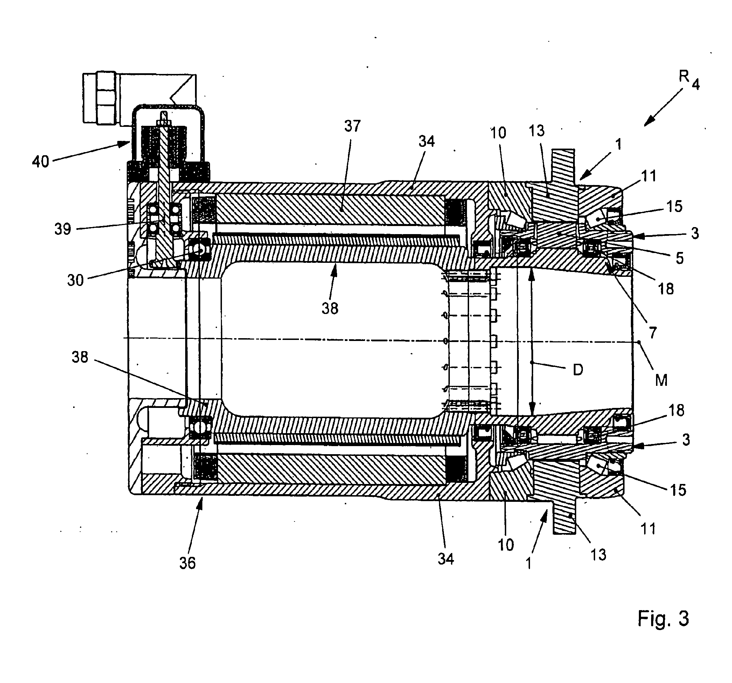

Im nicht beanspruchten Ausführungsbeispiel gemäss Figur 3 ist ein weiteres Koaxialgetriebe R₄ aufgezeigt, welches im wesentlichen dem Koaxialgetriebe R₁ entspricht. Es hat sich hierbei als besonders vorteilhaft erwiesen, dass sich stirnseitig in Axialrichtung an das Antriebselement 7 ein Hohlwellenelektroantrieb 36 anschliessen lässt. Der Hohlwellenelektroantrieb 36 weist ein Motorgehäuse 34 auf, welches sich stirnseitig und in Axialrichtung direkt an das Gehäuseteil 10 des Koaxialgetriebes R₄ anschliessen lässt.

Innerhalb des Motorgehäuses 34 ist eine Spulenwicklung 37 als Erregerspule 33 vorgesehen, um einen Hohlwellenrotor 38 mit Permanentmagneten od. dgl. anzutreiben. Der Hohlwellenrotor 38 schliesst unmittelbar an das Antriebselement 7 des Koaxialgetriebes R₄ an. Er besitzt im wesentlichen den gleichen Innendurchmesser D wie das Antriebselement 7.

Stirnseitig ist der Hohlwellenrotor 38 über ein Lager 30 gegenüber dem Motorgehäuse 34 abgestützt. Zudem kann an den Hohlwellenrotor 38 eine Messwelle 39, die eine Drehbewegung zu einem Sensorelement 40 überträgt, und/oder Bremse anschliessen.

Besonders vorteilhaft ist hier, dass auch durch die Gewährleistung eines möglichst grossen Innendurchmessers D Hohlwellenelektroantriebe 36 verwendet werden können, die den gleichen oder ähnlichen Querschnitt aufweisen und eine sehr hohe Antriebsleistung der gesamten Antriebseinheit gewährleisten.

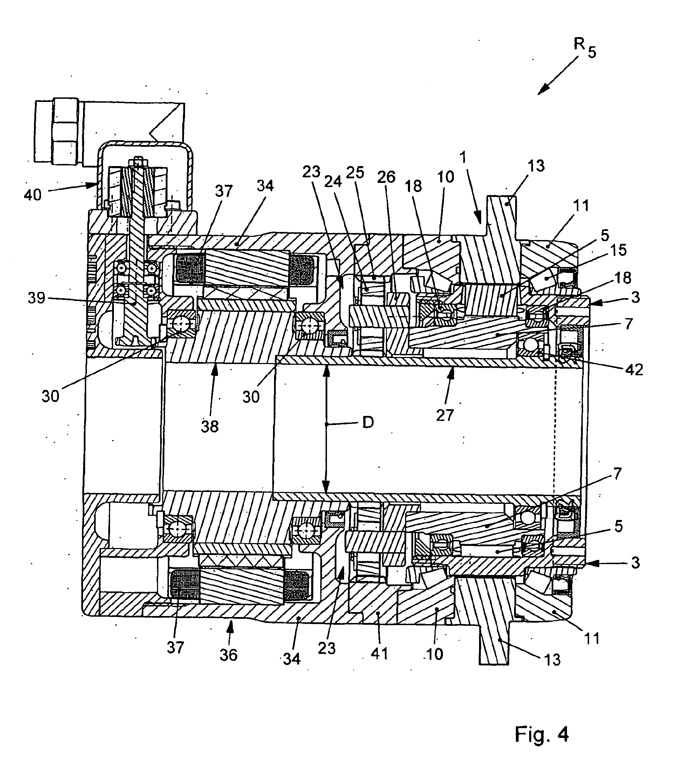

Im Ausführungsbeispiel der vorliegenden Erfindung gemäss Figur 4 ist ein Koaxialgetriebe R₅ aufgezeigt, welches in etwa dem Koaxialgetriebe R₄ gemäss Figur 3 entspricht. Unterschiedlich ist hier, dass zwischen Hohlwellenelektroantrieb 36 und Koaxialgetriebe eine Vorstufe 23, insbesondere eine Planetenvorstufe kreisringartig axial dazwischen angeordnet ist.

Dabei kämmt ein hohlwellenartig ausgebildetes Sonnenrad 27 eine Mehrzahl von Planeten 24, die mit einer Innenverzahnung 25 eines weiteren Gehäuseteiles 41 in Eingriff stehen, wobei die Mehrzahl der Planeten 24 über einen gemeinsamen kreisringartig angeordneten Planetenradträger 26 geführt werden. Der Planetenradträger 26 steht mit dem Antriebselement 7 in Verbindung. Das als Hohlwelle ausgeführte Sonnenrad 27 ist über zusätzliche Lager 42 gegenüber dem Antriebselement 7 abgestützt.

Zusätzlich ist der Hohlwellenrotor 38 über zwei stirnseitige Lager 30 gegenüber dem Rotorgehäuse 34 abgestützt, so dass gleichzeitig eine stirnseitige Lagerung des hohlwellenartigen Sonnenrades 27 gewährleistet wird.

Bei der vorliegenden Erfindung hat sich als besonders vorteilhaft erwiesen, dass kreisringartig, axial zwischen Hohlwellenelektroantrieb 36 und dem Gehäuseteil 10 des ursprünglichen Koaxialgetriebes R₅ umlaufend zur Gewährleistung eines grossen Innendurchmessers D eine erste Vorstufe 23, insbesondere Plantetenstufe, eingesetzt ist. Auf diese Weise wird gewährleistet, dass im kleinsten Bauraum bei geringstmöglichem Aussendurchmesser unter Gewährleistung eines maximal erzielbaren Innendurchmessers D ein Koaxialgetriebe R₅ geschaffen ist, welches mit einer Vorstufe 23 ausgestattet ist.

Vorzugsweise weist jedes Gehäuseteil 10, 11 eine Abtriebslagerfläche 12 auf, an welcher die Abtriebslager, axial gelagert, über eine Lageraufnahme 16, 17 eine Lagerung zum Abtriebselement 3 bilden, wobei die Abtriebslager in dem Gehäuseteil 10, 11 jeweils stirnseitig von aussen axial einsetzbar sind. Vorzugsweise ist das Antriebselement 7 koaxial innerhalb des Abtriebselementes 3 eingesetzt und weist zumindest eine äussere Profilierung 8 auf, die bei rotativer Bewegung die Zahnsegmente 5 gegen die Hohlradinnenverzahnung 13 bewegt, wobei axial jeweils neben der Profilierung 8 ein Antriebslager 18 vorgesehen ist, welches sich innen gegenüber dem Abtriebselement 3 abstützt.

Vorzugsweise ist das Abtriebselement 3 über stirnseitige Abtriebslager 15 abgestützt und über Lageraufnahmen 16, 17 gegenüber den Gehäuseteilen 10, 11 gelagert.

Vorzugsweise ist zur axialen Lagerung des Antriebselementes 7 gegenüber dem Abtriebselement 3 jeweils beidseitig neben der Profilierung 8 ein Lagersitz 19, 20 gebildet.

### Bezugszeichenliste

| | | | | | |
|---|---|---|---|---|---|
| 1 | Hohlrad | 34 | Motorgehäuse | 67 | |
| 2 | Zähne | 35 | Motorwelle | 68 | |
| 3 | Abtriebselement | 36 | Hohlwellenelektroantrieb | 69 | |
| 4 | Führungen | 37 | Spulenwicklung | 70 | |
| 5 | Zahnsegmente | 38 | Hohlwellenrotor | 71 | |
| 6 | Zahnflanke | 39 | Messwelle | 72 | |
| 7 | Antriebselement | 40 | Sensorelement | 73 | |
| 8 | Profilierung | 41 | Gehäuseteil | 74 | |
| 9 | Kontur | 42 | Lager | 75 | |
| 10 | Gehäuseteil | 43 | | 76 | |
| 11 | Gehäuseteil | 44 | | 77 | |
| 12 | Abtriebslager-fläche | 45 | | 78 | |
| 13 | Hohlradinnenverzahnung | 46 | | 79 | |
| 14 | Befestigungs-element | 47 | | | |
| 15 | Abtriebslaqer | 48 | | R₁ | Koaxialpetriebe |
| 16 | Lageraufnahme | 49 | | R₂ | Koaxialgetriebe |
| 17 | Lageraufnahme | 50 | | R₃ | Koaxialgetriebe |
| 18 | Antriebslager | 51 | | R₄ | Koaxialgetriebe |
| 19 | Lagersitz | 52 | | R₅ | Koaxialgetriebe |
| 20 | Lagersitz | 53 | | D | Innendurchmesser |
| 21 | Vorsprung | 54 | | | |
| 22 | Lagerhaltering | 55 | | | |
| 23 | Vorstufe | 56 | | M | Mittelachse |
| 24 | Planet | 57 | | | |
| 25 | Innenverzahnung | 58 | | | |
| 26 | Planetenradträger | 59 | | | |
| 27 | Sonnenrad | 60 | | | |
| 28 | Antriebswelle | 61 | | | |
| 29 | Antriebsritzel | 62 | | | |
| 30 | Lager | 63 | | | |
| 31 | Lagergehäuse | 64 | | | |
| 32 | elektrischer Antrieb | 65 | | | |
| 33 | Erregerspule | 66 | | | |

## Patentansprüche

1. Koaxialgetriebe, insbesondere Hohlwellengetriebe mit einem Antriebselement (7) und einem Abtriebselement (3), wobei eine Übersetzung sowie eine Übertragung eines Antriebsmomentes zwischen Antriebselement (7) und Abtriebselement (3) über eine Mehrzahl von radial bewegbaren Zahnsegmenten (5) erfolgt,
**dadurch gekennzeichnet,**
**dass** das Antriebselement (7) als Hohlwelle ausgebildet ist, in welche eine Vorstufe (23) eingesetzt ist.

2. Koaxialgetriebe nach Anspruch 1, **dadurch gekennzeichnet, dass** die Vorstufe (23) als Planetenvorstufe in das Antriebselement (7) eingesetzt ist.

3. Koaxialgetriebe nach Anspruch 1 oder 2, **dadurch gekennzeichnet, dass** die Vorstufe (23) eine Planetenvorstufe ist, wobei einzelne Planeten (24) eine Innenverzahnung (25) des Antriebselementes (7) kämmen.

4. Koaxialgetriebe nach Anspruch 3, **dadurch gekennzeichnet, dass** die einzelnen Planeten (24) in einem Planetenradträger (26) gelagert sind, welcher im Abtriebselement (3) angeordnet ist.

5. Koaxialgetriebe nach wenigstens einem der Ansprüche 1 bis 4, **dadurch gekennzeichnet, dass** die Planeten (24) ein gemeinsames Sonnenrad (27) kämmen, welches über eine in einem Lagergehäuse (31) gelagerte Antriebswelle (28) antreibbar ist.

6. Koaxialgetriebe nach Anspruch 5, **dadurch gekennzeichnet, dass** das Lagergehäuse (31) zur Aufnahme der Antriebswelle (28) axial mit einem ersten Gehäuseteil (10) verbindbar ist.

7. Koaxialgetriebe nach wenigstens einem der Ansprüche 1 bis 6, **dadurch gekennzeichnet, dass** die vollständige Planetenvorstufe (23) mit Sonnenrad (27), Planeten (24), Planetenradträger (26) und Antriebswelle (28) für das Sonnenrad (27), Innerhalb einer Abtriebsstufe koaxial eingesetzt ist.

8. Koaxialgetriebe nach wenigstens einem der Ansprüche 1 bis 7, **dadurch gekennzeichnet, dass** innerhalb des als Hohlwelle ausgeführten Antriebselementes (7) eine erste Vorstufe (23) sowie ein damit verbundener elektrischer Antrieb (32) koaxial eingesetzt sind.

9. Koaxialgetriebe nach Anspruch 8, **dadurch gekennzeichnet, dass** die erste Vorstufe (23) als Planetenvorstufe ausgebildet ist, bei welcher eine Mehrzahl von Planeten (24) eine Innenverzahnung (25) des Antriebselementes (7) kämmen, wobei die Planeten (24) in einem gemeinsamen Planetenradträger (26) gelagert sind.

10. Koaxialgetriebe nach Anspruch 9, **dadurch gekennzeichnet, dass** die Planeten (24) Ober ein gemeinsames Sonnenrad (27) antreibbar sind.

11. Koaxialgetriebe nach Anspruch 10, **dadurch gekennzeichnet, dass** das Sonnenrad (27) über einen elektrischen Antrieb (32), welcher koaxial innerhalb einer der beiden Gehäuseteile (10, 11) und nahezu oder komplett innerhalb einer Abtriebsstufe angeordnet und über ein Motorgehäuse (34)
gehalten ist, antreibbar ist, wobei das Motorgehäuse axial an ein erstes Gehäuseteil (10) anschliesst.

12. Koaxialgetriebe nach wenigstens einem der Ansprüche 8 bis 11, **dadurch gekennzeichnet, dass** Rotor und Stator bzw. die Erregerspule (33) des elektrischen Antriebes (32) nahezu oder komplett innerhalb einer Abtriebsstufe koaxial angeordnet sind.

13. Koaxialgetriebe nach wenigstens einem der Ansprüche 9 bis 12, **dadurch gekennzeichnet, dass** der Planetenradträger (26) koaxial innerhalb des Abtriebselementes (3) eingesetzt und fest verbunden ist.

14. Koaxialgetriebe nach wenigstens einem der Ansprüche 1 bis 13, **dadurch gekennzeichnet, dass** ein feststehendes Element aus zwei axial nebeneinander angeordneten Gehäuseteilen (10, 11) gebildet ist, zwischen welchen axial eine Hohlradinnenverzahnung (13) kreisringartig eingesetzt ist.

15. Koaxialgetriebe nach wenigstens einem der Ansprüche 1 bis 14, **dadurch gekennzeichnet, dass** über eine Mehrzahl von durchgehenden Befestigungselementen (14) die beiden Gehäuseteile (10, 11) mit dazwischen angeordneter Hohlradinnenverzahnung (13) miteinander verbindbar sind.

## Claims

1. A coaxial transmission, in particular a hollow shaft transmission having a drive element (7) and an output element (3), wherein there is a stepping up and a transmission of a drive moment between the drive element (7) and the output element (3) by way of a plurality of radially movable tooth segments (5), **characterised in that** the drive element (7) takes the form of a hollow shaft in which an prestage (23) is inserted.

2. A coaxial transmission according to Claim 1, **characterised in that** the prestage (23) is inserted into the drive element (7) in the form of a planetary prestage.

3. A coaxial transmission according to Claim 1 or 2, **characterised in that** the prestage (23) is a planetary prestage, wherein individual planetary gears (24) mesh with an internal toothing (25) of the drive element (7).

4. A coaxial transmission according to Claim 3, **characterised in that** the individual planetary gears (24) are mounted in a planetary gear carrier (26) which is arranged in the output element (3).

5. A coaxial transmission according to at least one of Claims 1 to 4, **characterised in that** the planetary gears (24) mesh with a common sun gear (27) which may be driven by way of a drive shaft (28) mounted in a bearing housing (31).

6. A coaxial transmission according to Claim 5, **characterised in that** for receiving the drive shaft (28) the bearing housing (31) may be axially connected to a first housing part (10).

7. A coaxial transmission according to at least one of Claims 1 to 6, **characterised in that** the complete planetary prestage (23), with the sun gear (27), planetary gears (24), planetary gear carrier (26) and drive shaft (28) for the sun gear (27), is inserted coaxially within an output stage.

8. A coaxial transmission according to at least one of Claims 1 to 7, **characterised in that** a first prestage (23) and an electrical drive (32) connected thereto are inserted coaxially within the drive element (7), which takes the form of a hollow shaft.

9. A coaxial transmission according to Claim 8, **characterised in that** the first prestage (23) takes the form of a planetary prestage in which a plurality of planetary gears (24) mesh with an internal toothing (25) of the drive element (7), wherein the planetary gears (24) are mounted in a common planetary gear carrier (26).

10. A coaxial transmission according to Claim 9, **characterised in that** the planetary gears (24) are drivable by way of a common sun gear (27).

11. A coaxial transmission according to Claim 10, **characterised in that** the sun gear (27) is drivable by way of an electrical drive (32) which is arranged coaxially within one of the two housing parts (10, 11) and almost or completely within an output stage and is held by way of a motor housing (34), wherein the motor housing axially adjoins a first housing part (10).

12. A coaxial transmission according to at least one of Claims 8 to 11, **characterised in that** the rotor and stator or the exciter coil (33) of the electrical drive (32) are arranged coaxially almost or completely within an output stage.

13. A coaxial transmission according to at least one of Claims 9 to 12, **characterised in that** the planetary gear carrier (26) is inserted coaxially within the output element (3) and is fixedly connected.

14. A coaxial transmission according to at least one of Claims 1 to 13, **characterised in that** a stationary element is formed by two housing parts (10, 11) which are arranged axially next to one another and between which a hollow gear internal toothing (13) is inserted axially in the manner of a circular ring.

15. A coaxial transmission according to at least one of Claims 1 to 14, **characterised in that** the two housing parts (10, 11) are connected to one another, with a hollow gear internal toothing (13) arranged between them, by way of a plurality of fastening elements (14) passing through them.

## Revendications

1. Transmission coaxiale, en particulier transmission à arbre creux avec un élément d'entraînement (7) et un élément de sortie (3), une multiplication ainsi qu'une transmission d'un couple d'entraînement entre l'élément d'entraînement (7) et l'élément de sortie (3) ayant lieu par l'intermédiaire d'une pluralité de segments dentés (5) déplaçables radialement,
**caractérisée par le fait**
**que** l'élément (7) est réalisé sous forme d'arbre creux dans lequel est placé un étage préliminaire (23).

2. Transmission coaxiale selon la revendication 1, **caractérisée par le fait que** l'étage préliminaire (23) est placé sous formé d'étage préliminaire planétaire dans l'élément d'entraînement (7).

3. Transmission coaxiale selon la revendication 1 ou 2, **caractérisée par le fait que** l'étage préliminaire (23) est un étage préliminaire planétaire, des roues planétaires individuelles (24) engrenant une denture intérieure (25) de l'élément d'entraînement (7).

4. Transmission coaxiale selon la revendication 3, **caractérisée par le fait que** les roues planétaires individuelles (24) sont montées dans un porte-roue planétaire (26) qui est disposé dans l'élément de sortie (3).

5. Transmission coaxiale selon au moins l'une des revendications 1 à 4, **caractérisée par le fait que** les roues planétaires (24) engrènent une roue solaire commune (27) qui peut être entraînée par l'intermédiaire d'un arbre d'entraînement (28) monté dans un boîtier de palier (31).

6. Transmission coaxiale selon la revendication 5, **caractérisée par le fait que** le boîtier de palier (31) peuvent, pour recevoir l'arbre d'entraînement (28), être connecté axialement à un premier élément de boîtier (10).

7. Transmission coaxiale selon au moins l'une des revendications 1 à 6, **caractérisée par le fait que** l'étage planétaire préliminaire complet (23), avec la roue solaire (27), les roues planétaires (24), le porte-roue (26) et l'arbre d'entraînement (28) de la roue solaire (27), est placé coaxialement à l'intérieur d'un étage de sortie.

8. Transmission coaxiale selon au moins l'une des revendications 1 à 7, **caractérisée par le fait qu'**à l'intérieur de l'élément d'entraînement (7) réalisé sous forme d'arbre creux sont placés coaxialement un premier étage préliminaire (23) ainsi qu'un entraînement électrique (32) y relié.

9. Transmission coaxiale selon la revendication 8, **caractérisée par le fait que** le premier étage préliminaire (23) est réalisé sous forme d'étage préliminaire planétaire dans lequel une pluralité de roues planétaires (24) engrènent une denture intérieure (25) de l'élément d'entraînement (7), les roues planétaires (24) étant montées dans un porte-roue planétaire commun (25).

10. Transmission coaxiale selon la revendication 9, **caractérisée par le fait que** les roues planétaires (24) peuvent être entraînées par l'intermédiaire d'une roue solaire commune (27).

11. Transmission coaxiale selon la revendication 10, **caractérisée par le fait que** la roue solaire (27) peut être entraînée par l'intermédiaire d'un entraînement électrique (32) maintenu coaxialement dans l'un des deux éléments de boîtier (10, 11) et disposé pratiquement ou complètement à l'intérieur d'un étage de sortie et par l'intermédiaire d'un carter de moteur (34), le carter de moteur se raccordant axialement à un premier élément de boîtier (10).

12. Transmission coaxiale selon au moins l'une des revendications 8 à 11, **caractérisée par le fait que** le rotor et le stator ou la bobine d'excitation (33) de l'entraînement électrique (32) sont disposés coaxialement pratiquement ou complètement à l'intérieur d'un étage de sortie.

13. Transmission coaxiale selon au moins l'une des revendications 9 à 12, **caractérisée par le fait que** le porte-roue planétaire (26) est placé coaxialement et assemblé de manière solidaire à l'intérieur de l'élément de sortie (3).

14. Transmission coaxiale selon au moins l'une des revendications 1 à 13, **caractérisée par le fait qu'**un élément stationnaire est constitué de deux éléments de boîtier (10, 11) disposés axialement l'un à côté de l'autre, entre lesquels est placée axialement en forme de bague circulaire une denture intérieure de roue creuse (13).

15. Transmission coaxiale selon au moins l'une des revendications 1 à 14, **caractérisée par le fait que** les deux éléments de boîtier (10, 11) peuvent, par l'intermédiaire d'une pluralité d'éléments de fixation continus (14), être connectés entre eux avec la denture intérieure de roue creuse (13) disposée entre eux.
